# EUROPEAN PATENT APPLICATION

(11) **EP 4 552 909 A1**
(43) Date of publication of application: **14.05.2025**
(21) Application number: 24208511.6
(22) Date of filing: 23.10.2024
(51) Int. Cl.: B60L 53/16, B60L 53/18, H01R 13/631

(54) **ADAPTIVE ADJUSTED CHARGING MECHANISM AND CHARGING STATION WITH THE SAME**

(30) Priority: 08.11.2023 CN 202323019573 U
(71) Applicant: Hangzhou Hikrobot Co., Ltd., Hangzhou, Zhejiang 310051 (CN)
(72) Inventor: GUO, Minzheng, Hangzhou, 310051 (CN); HONG, Yihong, Hangzhou, 310051 (CN)
(74) Representative: Vogelbruch, Keang

(57) **Abstract**

The application discloses an adaptive adjusted charging mechanism, including a charging head for docking with an external charging end and a base for mounting the charging head; where the adaptive adjusted charging mechanism further includes a first connecting plate provided on the charging head; a second connecting plate provided on the base; and an elastic member between the first connecting plate and the second connecting plate, where the elastic member is configured to be capable of being contracted and deformed in a direction of an external pressing force when the charging head is subjected to the external pressing force in any direction. The application further discloses a charging station including the above-mentioned adaptive adjusted charging mechanism. According to the application, under the condition that the external charging end and the charging head have an angle deviation between docking surfaces, the charging head can be driven to automatically adapt to the angle of the charging end through an adaptive capacity of the elastic element, and relatively high-precision docking is realized within the angle design deviation.

## Description

### TECHNICAL FIELD

The application relates to the technical field of a charging device, in particular to an adaptive adjusted charging mechanism and a charging station with the same.

### BACKGROUND

When the AGV (automated guided vehicle) is charged, a charging end of the AGV needs to be well docked with a charging head on a charging station to realize charging. However, due to the limitation of factors such as site environment, structural consistency and algorithm control, in reality, during the charging process of AGV, between the charging end and the charging head, there may be positional deviations in three directions X, Y, Z, as well as angular deviations in the docking surfaces, which results in inaccurate automatic docking between the charging end of the AGV and the charging head on the charging station. In order to solve the above technical problems in the related art, an elastic floating assembly in three directions of X, Y and Z are generally provided for the charging head on the charging station, such that when the charging end and the charging head have position deviations in the three directions of X, Y and Z, during the process that the AGV needs to be charged to perform the docking operation between the charging end and the charging head, the charging head can be automatically adapted to the position of the charging end through the elastic floating assembly, thereby achieving relatively accurate automatic docking within the position deviation allowed by design.

The elastic floating assembly in the related art generally includes a guide rail, a sliding block slidably disposed in the guide rail, and a spring being compressed and retracted by the sliding block. This elastic floating assembly is cumbersome to assemble, and is effective only for positional deviations between the charging end and the charging head in three directions of X, Y, and Z, and ineffective for a case where there is an angular deviation in docking surfaces between the charging end and the charging head.

### SUMMARY

The application provides an adaptive adjusted charging mechanism and a charging station with the adaptive adjusted charging mechanism.

The application adopts the following technical solution. An adaptive adjusted charging mechanism, includes a charging head for docking with an external charging end and a base for mounting the charging head, where the charging mechanism further includes: a first connecting plate provided with the charging head; a second connecting plate provided with the base; and an elastic member between the first connecting plate and the second connecting plate; where the elastic member is configured to be capable of being contracted and deformed in a direction of an external pressing force when the charging head is subjected to the external pressing force in any direction.

The application has the following beneficial effects: the elastic member is configured to be capable of being contracted and deformed in the direction of the external pressing force when the charging head is subjected to the external pressing force in any direction, such that when the charging head is docked with the charging end on the AGV, during the moving process of the AGV, the charging end on the AGV approaches and contacts the charging head and applies pressure to the charging head. If there is an angular deviation in the docking surfaces between the charging end and the charging head, the charging end will apply an external force to the charging head in a length direction of the charging head with a certain included angle, and correspondingly, the elastic member can be contracted and deformed in the direction of the external force, such that the charging head is driven to swing and the angle of the charging head relative to the charging end is changed, the charging head automatically adapts to the angle of the charging end, and high-precision docking is achieved within the design deviation.

In some embodiments, the elastic member includes at least one elastic column, and two ends of each elastic column in the at least one elastic column are respectively connected to the first connecting plate and the second connecting plate.

In some embodiments, each of the two ends of the elastic column is provided with a connecting block having internal thread, the first connecting plate is provided with a connecting hole adapted to the connecting block, and the second connecting plate is provided with a connecting hole adapted to the connecting block, and the two ends of the elastic column are fixedly connected to the first connecting plate and the second connecting plate by screwing into the connecting blocks through screws passing through the connecting holes, respectively.

In some embodiments, the charging head includes a housing, a charging cable and a roller, where there is a channel formed in a middle of the housing in a length direction of the housing, there are grooves formed outside two sides of the channel, the charging cable is in the channel, and the rollers are in the grooves and partially exposed out of the housing.

In some embodiments, an end of the housing away from the base is provided with a guide inclined surface.

In some embodiments, the adaptive adjusted charging mechanism further includes a connecting frame, first floating assembly and second floating assembly, the first floating assembly is between the second connecting plate and the connecting frame, and the second floating assembly is between the connecting frame and the base; where the first floating assembly is configured to drive the connecting frame to move in a first setting direction when the charging head is subjected to the external pressing force, and the second floating assembly is configured to drive the connecting frame to move in a left-right direction of the first setting direction when the charging head is subjected to the external pressing force; where the first setting direction is the same as the length direction of the charging head.

In some embodiments, the base includes a fixed plate and a mounting frame on the other side of the fixed plate relative to the charging head, and the mounting frame is slidably disposed on the fixed plate in the first setting direction; the connecting frame includes a first base plate and first side plates on two sides of the first base plate, and the mounting frame includes a second base plate and second side plates on two sides of the second base plate; and the first floating assembly includes a first spring between the second connecting plate and the first base plate, and the second floating assembly includes a second spring between the first side plates and the second side plates.

In some embodiments, the mounting frame further includes a mounting plate on each of the second side plates, one of the mounting plate and the fixing plate is provided with a position limiting hole, the other one of the mounting plate and the fixing plate is provided with a position limiting column, and the mounting frame is slidably inserted into the position limiting hole through the position limiting column and is slidably disposed on the fixing plate.

In some embodiments, the first floating assembly further includes a linear bearing on the first base plate and a mounting shaft slidably in the linear bearing, the first spring is sleeved outside the mounting shaft, and one end of the first spring abuts against the second connecting plate and the other end of the first spring abuts against the linear bearing.

In some embodiments, the second floating assembly further includes a connecting shaft passing through the two first side plates and the two second side plates, and the second spring is sleeved outside the connecting shaft.

In some embodiments, the adaptive adjusted charging mechanism further includes a shoulder-shaped bushing, the shoulder-shaped bushing includes a tube portion sleeved outside the connecting shaft and a flanging portion extending radially from an opening of the tube portion, one end of the second spring abuts against the flanging portion, and the other end of the second spring abuts against the second side plate; the first side plate is provided with a through hole for the connecting shaft to pass through, and the tube portion extends into the through hole.

In addition, the application further provides a charging station, including a power supply, and further including the adaptive adjusted charging mechanism according to any one of the above technical solutions, where the charging head is electrically connected to the power supply through a cable. The beneficial effect reasoning process of the charging station provided by the application is similar to that of the foregoing adaptive adjusted charging mechanism, and details are not described herein again.

These features and advantages of the application will be disclosed in detail in the following detailed description and accompanying drawings. The embodiments or means of the application will be described in detail with reference to the accompanying drawings, but are not intended to limit the technical solutions of the application. In addition, the features, elements, and components appearing in each of the following and the accompanying drawings are plural, and different symbols or numbers are labelled for convenience of presentation, but all represent components of the same or similar construction or function.

### BRIEF DESCRIPTION OF DRAWINGS

The following further describes the application with reference to the accompanying drawings.
FIG. 1 is a schematic structural diagram of an adaptive adjusted charging mechanism according to embodiments of the application.
FIG. 2 is an exploded view of an elastic member, a first connecting plate and a second connecting plate in the adaptive adjusted charging mechanism provided by embodiments of the application.
FIG. 3 is a schematic structural diagram of a charging head in an adaptive adjusted charging mechanism according to embodiments of the application.
FIG. 4 is a top view of the charging head in FIG. 3.
FIG. 5 is an enlarged view of part A in FIG. 4.
FIG. 6 is a side view of the charging head in FIG. 3.
FIG. 7 is an enlarged view of part B in FIG. 6.
FIG. 8 is a schematic structural diagram of an adaptive adjusted charging mechanism from another viewing angle according to embodiments of the application.
FIG. 9 is an exploded view of the adaptive adjusted charging mechanism in FIG. 8.
FIG. 10 is an exploded view of a connecting frame, a connecting shaft, a second spring and a shoulder-shaped bushing in an adaptive adjusted charging mechanism according to embodiments.
FIG. 11 is a schematic structural diagram of a charging station of an adaptive adjusted charging mechanism according to embodiments of the application.

Reference numerals: 1-charging head, 10-housing, 100-guide inclined surface, 101-channel, 102-groove, 11-charging cable, 12-roller, 2-base, 20-fixing plate, 21-mounting frame, 210-second base plate, 211-second side plate, 212-mounting plate, 2120-position limiting hole, 3-first connecting plate, 4-second connecting plate, 5-elastic member, 50-connecting block, 51-screw, 6-connecting frame, 60-first base plate, 61-first side plate, 7-first floating assembly, 70-first spring, 71-linear bearing, 72-mounting shaft, 8-second floating assembly, 80-second spring, 81-connecting shaft, 82-shoulder-shaped bushing, 820-tube portion, 821-flanging portion, 9-cabinet body.

### DETAILED DESCRIPTION

Embodiments of the application are described in detail below, examples of the embodiments are shown in the accompanying drawings, where the same or similar reference numerals denote the same or similar elements or elements having the same or similar functions throughout. The embodiments in the application are intended to explain the application, and cannot be construed as limiting the application.

The term "an embodiment" or "implementation" or "example" referred to in this specification means that a particular feature, a structure, or characteristic described in connection with the embodiment itself may be included in at least one embodiment disclosed herein. The appearance of the phrase "in an embodiment" at various locations in the specification does not necessarily refer to the same embodiment.

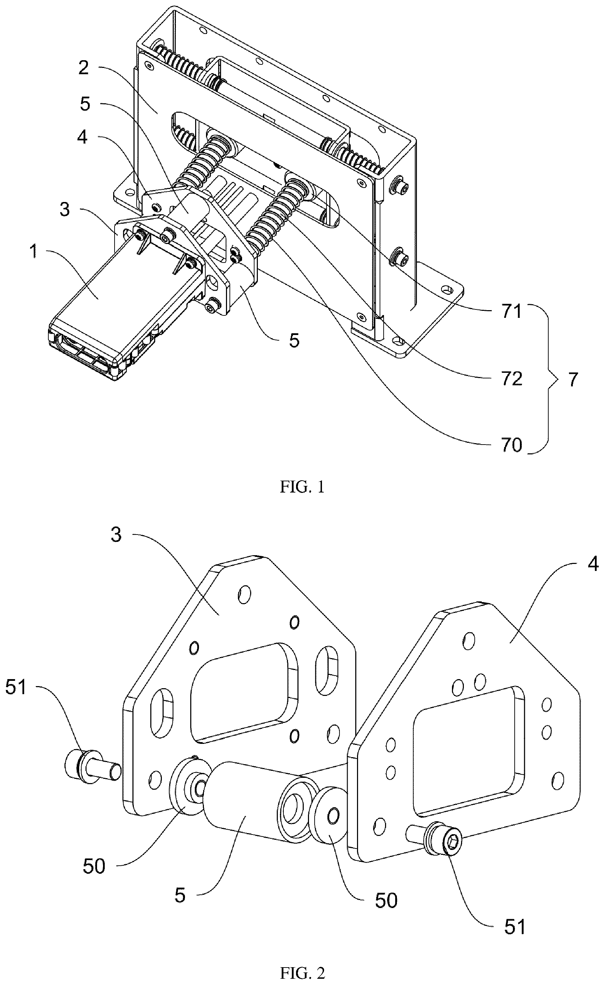

This embodiment provides an adaptive adjusted charging mechanism, as shown in FIG. 1, the adaptive adjusted charging mechanism includes a charging head 1 for docking with an external charging end and a base 2 for mounting the charging head 1. In addition, the adaptive adjusted charging mechanism further includes a first connecting plate 3, a second connecting plate 4 and an elastic member 5. The first connecting plate 3 is provided on the charging head 1, the second connecting plate 4 is provided on the base 2, the elastic member 5 is between the first connecting plate 3 and the second connecting plate 4, and the elastic member 5 is configured to be capable of being contracted and deformed in a direction of an external pressing force when the charging head 1 is subjected to the external pressing force in any direction. In this way, when the charging head 1 is docked with the charging end of the AGV, during the movement of the AGV, the charging end of the AGV approaches and contacts the charging head 1 and applies pressure to the charging head 1. If there is an angular deviation in docking surfaces between the charging end and the charging head 1, the charging end applies an external force to the charging head 1 in a length direction of the charging head 1 with a certain included angle, and correspondingly, the elastic member 5 can be contracted and deformed in the direction of the external force, and thus the charging head 1 is driven to swing to change the angle of the charging head 1 relative to the charging end, such that the charging head 1 automatically adapts to the angle of the charging end, and relatively high-precision docking is achieved within the design deviation.

In the embodiment of the application, the charging head 1 may be generally referred to as a charging male head, and the charging end of the AGV may be generally referred to as a charging female head, and the process of docking between the two is the process of inserting the charging male head into the charging female head. The docking process mainly relies on the automatic guidance function of the AGV to align and plug the charging female head of the AGV to the charging male head.

In the embodiment of the application, the elastic member 5 includes three elastic columns arranged in triangular, and two ends of each elastic column are respectively connected to the first connecting plate 3 and the second connecting plate 4. It is easy to understand that, in alternative embodiments, the number of the elastic columns may also be one (correspondingly, the diameter thereof may be larger), or other numbers. In addition, in other alternative embodiments, the elastic member may also have other shapes other than a cylindrical shape, such as an elastic pad, an elastic block, etc., and the elastic column, the elastic pad or the elastic block may be made of rubber or other elastic polymer materials. In some alternative embodiments, the elastic member may also be a spring, or a combination of an elastic pad and a spring. The difference between the elastic member in the embodiment of the application and the elastic floating assembly in the related art lies in that the elastic member in the embodiment of the application does not need to be provided with a guide rail or a shaft body and other structures for guiding the elastic member to be contracted and deformed in a single direction.

As shown in FIG. 2, in the embodiment of the application, the elastic column is assembled with the first connecting plate 3 and the second connecting plate 4 by using the following structure: each of two ends of the elastic column is provided with a connecting block 50 having internal thread, the first connecting plate 3 is provided with a connecting hole adapted to the connecting block 50, and the second connecting plate 4 is provided with a connecting hole adapted to the connecting block 50, and the two ends of the elastic column are screwing into the connecting blocks 50 through screws 51 passing through the connecting holes, thereby the elastic column fixedly connects to the first connecting plate 3 and the second connecting plate 4. Because the elastic column has an elastic deformation capability, directly using a screw for assembling may cause local deformation of the elastic column, such that an angle of the charging head 1 relative to the base 2 may not meet design requirements. By providing the connecting block 50 as an intermediate connecting member, on one hand, the connecting block 50 increases a contact area of the elastic column, and on the other hand, an internal thread hole can be conveniently provided in the connecting block 50 to achieve threaded connection to the screw 51. In some embodiments, the connecting block 50 is made of a material such as aluminum alloy, steel or copper alloy, and the connecting block 50 is directly integrally formed with the elastic column through a metal insert injection molding process. Therefore, it should be noted that, in FIG. 2, the connecting block 50 is shown separately from the elastic column for ease of showing the connecting block 50, but the connecting block 50 and the elastic column are actually integrally formed.

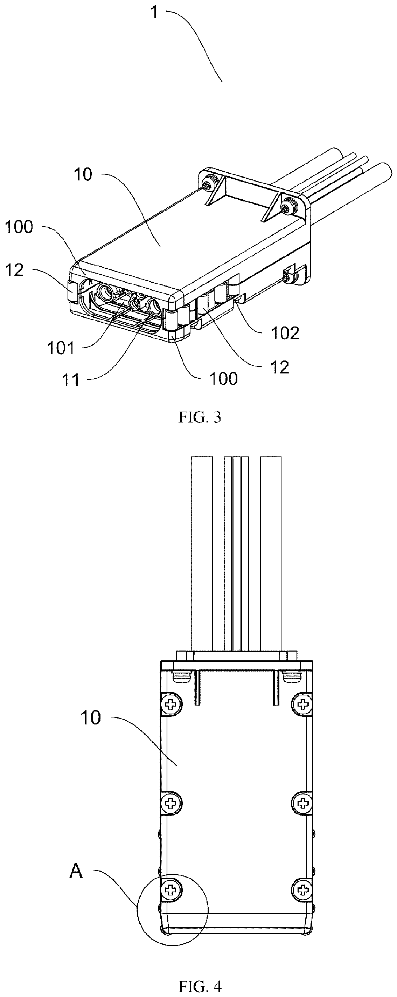

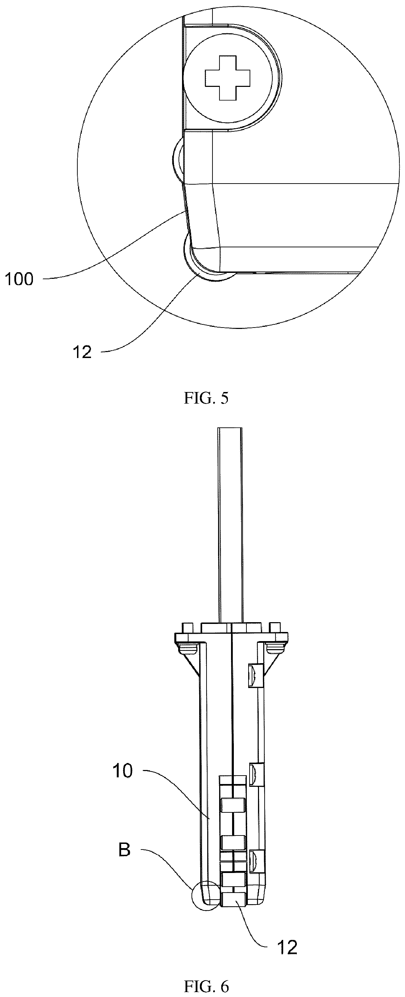

As shown in FIG. 3, in the embodiment of the application, the charging head 1 includes a housing 10, a charging cable 11 and rollers 12. There is a channel 101 formed in a middle of the housing 10 in a length direction of the housing 10, there are grooves 102 formed outside two sides of the channel 101, the charging cable 11 is in the channel 101, and the rollers 12 are in the grooves 102 and partially exposed out of the housing 10. By providing the grooves 102 and arranging the rollers 12 in the grooves 102, when the charging head 1 is docked with the charging end of the AGV, the rollers 12 can be utilized to reduce the friction effect between the charging head 1 and the charging end of the AGV, such that the charging head 1 has better self-adaptive docking capability with the charging end of the AGV. Further, as shown in FIG. 3, FIG. 5, FIG. 6, and FIG. 7, in the embodiment of the application, the end of the housing 10 away from the base 2 is provided with a guide inclined surface 100. In some embodiments, the guiding inclined surface 100 is an arc surface, and in other optional embodiments, the guiding inclined surface 100 may also be a plane. It is easy to understand that an inner wall of the opening of the charging end of the AGV may be provided with an inner structure matched with the guide inclined surface 100.

As shown in FIG. 1, FIG. 8, FIG. 9 and FIG. 10, the adaptive adjusted charging mechanism provided in the embodiment of the application further includes a connecting frame 6, first floating assembly 7 and second floating assembly 8. The first floating assembly 7 is between the second connecting plate 4 and the connecting frame 6, and the second floating assembly 8 is between the connecting frame 6 and the base 2; the first floating assembly 7 is configured to drive the connecting frame 6 to move in the first setting direction when the charging head 1 is subjected to an external pressing force; and the second floating assembly 8 is configured to drive the connecting frame 6 to move in a left-right direction of the first setting direction when the charging head 1 is subjected to an external pressing force. The first setting direction is the same as the length direction of the charging head 1. If the length direction of the charging head 1 is set to the front-rear direction, the first setting direction is the front-rear direction. By arranging the first floating assembly 7 and the second floating assembly 8, the position adaptive ability of the charging head 1 relative to the external charging end can be further enhanced in the front-rear direction and the left-right direction. Through the research of the inventor, it is found that since the height of the charging end of the AGV from the ground is easy to be controlled, the position deviation between the charging end and the charging head 1 in the up-down height direction is very small. Therefore, in the case that the adaptive adjusted charging mechanism provided in the embodiment of the application is already provided with an elastic column, the charging head 1 can automatically adapt to the position of the charging end through deformation of the elastic column when there is a position deviation in the height direction. Therefore, the adaptive adjusted charging mechanism provided by the embodiment of the application omits the floating assembly arranged in the up-down height direction, thereby reducing the cost.

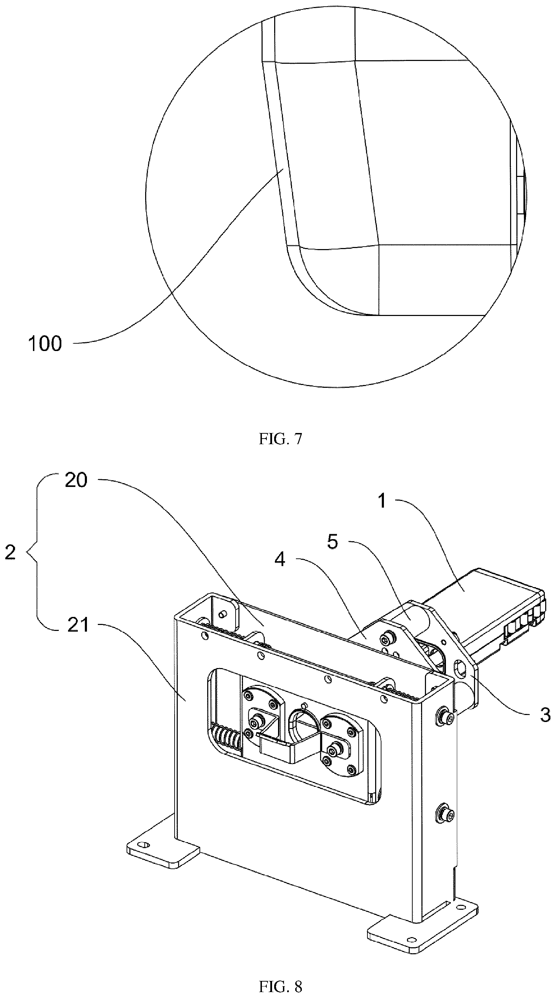

In some embodiments, as shown in FIG. 8, the base 2 includes a fixing plate 20 and a mounting frame 21 on the other side of the fixing plate 20 relative to the charging head 1, where the mounting frame 21 is slidably disposed on the fixing plate 20 in a first setting direction. In some embodiments, the following solution is used to implement the sliding arrangement of the mounting frame 21 relative to the fixing plate 20: the mounting frame 21 further includes a mounting plate 212 on the second side plate 211, there is a position limiting hole 2120 on the mounting plate 212, there is a position limiting column on the fixing plate 20, the position limiting column is slidably inserted into the position limiting hole 2120, and the mounting frame 21 is slidably disposed on the fixing plate 20 by slidably inserting the position limiting column into the position limiting hole 2120. It is easy to understand that, in an optional implementation, the position limiting hole may be on the fixing plate 20, and the position limiting column is correspondingly on the mounting plate 212.

In the embodiment of the application, the connecting frame 6 includes a first base plate 60 and first side plates 61 on two sides of the first base plate 60; and the mounting frame 21 includes a second base plate 210 and second side plates 211 on two sides of the second base plate 210; the first floating assembly 7 includes a first spring 70 between the second connecting plate 4 and the first base plate 60; and the second floating assembly 8 includes a second spring 80 between the first side plate 61 and the second side plate 211. In this way, the first spring 70 and the second spring 80 can be used to realize telescopic deformation. When the charging end of the AGV and the charging head 1 have a deviation in the left-right direction in position, the process of docking the charging end with the charging head 1 will apply pressure to charging head 1, and the charging head 1 can decompose the acting force into a force along the front-rear direction and a force along the left-right direction, such that the elastic member 5 generates certain compression deformation, and meanwhile, the first spring 70 and the second spring 80 can also generate corresponding compression deformation. In this process, the charging head 1, the first connecting plate 3, the second connecting plate 4, the mounting frame 21 and the connecting frame 6 all move in the front-rear direction and the left-right direction.

In addition, in the embodiment of the application, the first floating assembly 7 further includes a linear bearing 71 on the first base plate 60 and a mounting shaft 72 slidably in the linear bearing 71. The first spring 70 is sleeved outside the mounting shaft 72, one end of the first spring 70 abuts against the second connecting plate 4, and the other end of the first spring 70 abuts against the linear bearing 71. The second floating assembly 8 further includes a connecting shaft 81 passing through the two first side plates 61 and the two second side plates 211, and the second spring 80 is sleeved outside the connecting shaft 81. Compared with the manner of arranging the springs by using the guide rail and the sliding block, the above arrangement adopted in the embodiment of the application can realize quick assembly of the first spring 70 and the second spring 80, which can simplify the assembly operation, and the mounting frame 21 and the connecting frame 6 are both U-shaped frame structures, and the manufacturing cost is also lower. It is easy to understand that, in some optional implementations, the adaptive adjusted charging mechanism can also adopt the method of arranging springs using guide rails and sliders to arrange the first spring and second spring mentioned above in the embodiment of the application.

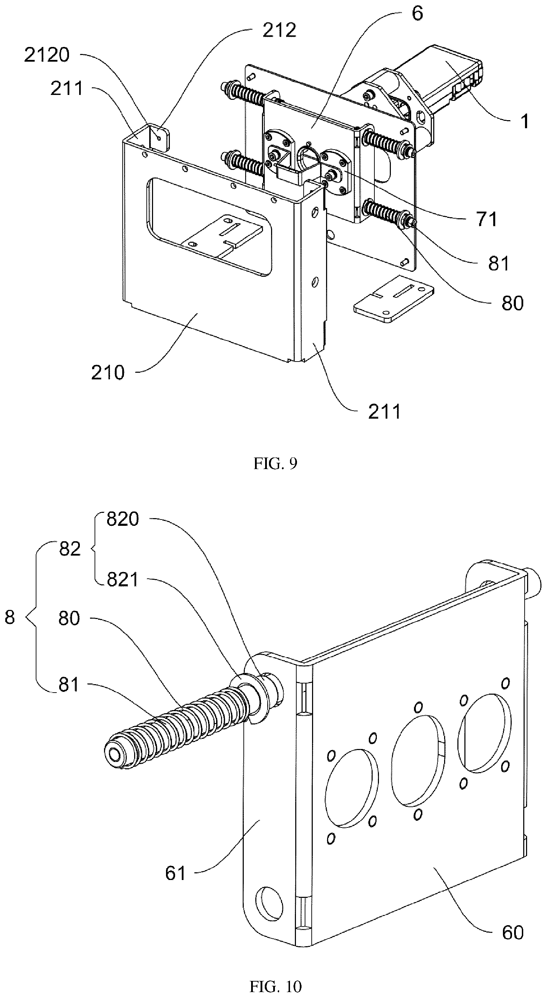

Further, as shown in FIG. 10, adaptive adjusted charging mechanism further includes a shoulder-shaped bushing 82, the shoulder-shaped bushing 82 includes a tube portion 820 sleeved outside the connecting shaft 81 and a flanging portion 821 extending radially from an opening of the tube portion 820. One end of the second spring 80 abuts against the flanging portion 821, and the other end of the second spring 80 abuts against the second side plate 211. The first side plate 61 is provided with a through hole for the connecting shaft 81 passing through, and the tube portion 820 extends into the through hole. By providing the shoulder-shaped bushing 82, the second spring 80 can be prevented from directly abutting against the first side plate 61. When the charging head 1 is docked with the external charging end, if the first side plate 61 moves, providing the shoulder-shaped bushing 82 can prevent the second spring 80 from being compressed and rubbing against the connecting shaft 81. Therefore, after the shoulder-shaped bushing 82 is provided, the service life of the second spring 80 can be significantly prolonged.

In conclusion, the adaptive adjusted charging mechanism provided in the embodiment of the application enables the charging head 1 to have an angle deviation micro-adjustment capability at any angle relative to the external charging end (that is, the adjustment capability of the position deviation in the front-rear direction, the left-right direction, and the height direction is included) by setting an elastic member 5 (for example, an elastic column). By using two-stage floating devices such as the first floating assembly 7 and the second floating assembly 8 enables the charging head 1 to have the adjustment capability of the position deviation in the front-rear direction and the left-right direction relative to the external charging end.

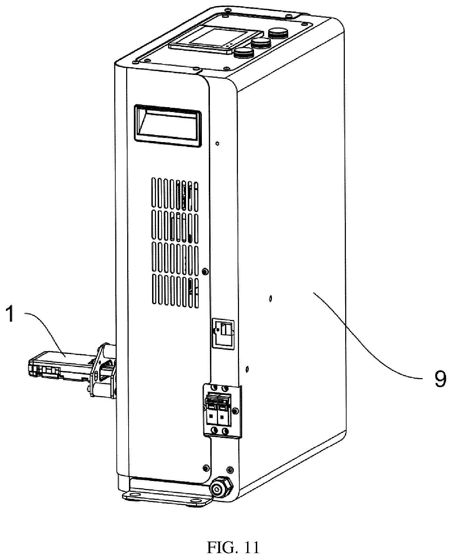

As shown in FIG. 11, when the adaptive adjusted charging mechanism provided in the embodiment of the application is applied, the adaptive adjusted charging mechanism may be applied to a charging station, and the charging station includes a power supply and the adaptive adjusted charging mechanism provided in the embodiment of the application. The charging head 1 is electrically connected with the power supply through a cable. In some embodiments, the charging station may include a cabinet body 9, and the power supply is in the cabinet body.

The foregoing are some embodiments of the application, but the protection scope of the application is not limited thereto, and those skilled in the art should understand that the application includes but is not limited to the accompanying drawings and the content described in the foregoing embodiments. Any modifications that do not depart from the functional and structural principles of the application will be included within the scope of the claims.

## Claims

1. An adaptive adjusted charging mechanism, comprising a charging head (1) for docking with an external charging end and a base (2) for mounting the charging head (1), **characterized in that**: the adaptive adjusted charging mechanism further comprises:
a first connecting plate (3) provided on the charging head (1);
a second connecting plate (4) provided on the base (2); and
an elastic member (5) between the first connecting plate (3) and the second connecting plate (4);
wherein the elastic member (5) is configured to be capable of being contracted and deformed in a direction of an external pressing force when the charging head (1) is subjected to the external pressing force in any direction.

2. The adaptive adjusted charging mechanism according to claim 1, wherein the elastic member (5) comprises at least one elastic column, and two ends of each elastic column in the at least one elastic column are respectively connected to the first connecting plate (3) and the second connecting plate (4).

3. The adaptive adjusted charging mechanism according to claim 2, wherein each of the two ends of the elastic column is provided with a connecting block (50) having internal thread, the first connecting plate (3) is provided with a connecting hole adapted to the connecting block (50), and the second connecting plate (4) is provided with a connecting hole adapted to the connecting block (50), and the two ends of the elastic column are fixedly connected to the first connecting plate (3) and the second connecting plate (4) by screwing into the connecting blocks (50) through screws (51) passing through the connecting holes, respectively.

4. The adaptive adjusted charging mechanism according to claim 1, wherein the charging head (1) comprises a housing (10), a charging cable (11) and rollers (12),
wherein there is a channel (101) formed in a middle of the housing (10) in a length direction of the housing (10), and there are grooves (102) formed outside two sides of the channel (101),
the charging cable (11) is in the channel (101), and the rollers are in the grooves (102) and partially exposed out of the housing (10).

5. The adaptive adjusted charging mechanism according to claim 4, wherein an end of the housing (10) away from the base (2) is provided with a guide inclined surface (100).

6. The adaptive adjusted charging mechanism according to any one of claims 1 to 5, further comprising a connecting frame (6), a first floating assembly (7) and a second floating assembly (8), wherein the first floating assembly (7) is between the second connecting plate (4) and the connecting frame (6), the second floating assembly (8) is between the connecting frame (6) and the base (2);
the first floating assembly (7) is configured to drive the connecting frame (6) to move in a first setting direction when the charging head (1) is subjected to the external pressing force, the second floating assembly (8) is configured to drive the connecting frame (6) to move in a left-right direction of the first setting direction when the charging head (1) is subjected to the external pressing force; and the first setting direction is the same as a length direction of the charging head (1).

7. The adaptive adjusted charging mechanism according to claim 6, wherein the base (2) comprises a fixing plate (20) and a mounting frame (21) on the other side of the fixing plate (20) relative to the charging head (1), and the mounting frame (21) is slidably disposed on the fixing plate (20) in the first setting direction;
the connecting frame (6) comprises a first base plate (60) and first side plates (61) on two sides of the first base plate (60), the mounting frame (21) comprises a second base plate (210) and second side plates (211) on two sides of the second base plate (210); and
the first floating assembly (7) comprises a first spring (70) between the second connecting plate (4) and the first base plate (60), and the second floating assembly (8) comprises a second spring (80) between the first side plates (61) and the second side plates (211).

8. The adaptive adjusted charging mechanism according to claim 7, wherein the mounting frame (21) further comprises a mounting plate (212) on each of the second side plates (211), one of the mounting plate (212) and the fixing plate (20) is provided with a position limiting hole (2120), the other one of the mounting plate (212) and the fixing plate (20) is provided with a position limiting column, and the mounting frame (21) is slidably inserted into the position limiting hole (2120) through the position limiting column and is slidably disposed on the fixing plate (20).

9. The adaptive adjusted charging mechanism according to claim 7, wherein the first floating assembly (7) further comprises a linear bearing (71) on the first base plate (60) and a mounting shaft (72) slidably disposed in the linear bearing (71), the first spring (70) is sleeved outside the mounting shaft (72), and one end of the first spring (70) abuts against the second connecting plate (4) and the other end of the first spring (70) abuts against the linear bearing (71).

10. The adaptive adjusted charging mechanism according to claim 7, wherein the second floating assembly (8) further comprises a connecting shaft (81) passing through the two first side plates (61) and the two second side plates (211), and
the second spring (80) is sleeved outside the connecting shaft (81).

11. The adaptive adjusted charging mechanism according to claim 10, wherein the adaptive adjusted charging mechanism further comprises a shoulder-shaped bushing (82),
the shoulder-shaped bushing (82) comprises a tube portion (820) sleeved outside the connecting shaft (81) and a flanging portion (821) extending radially from an opening of the tube portion (820),
one end of the second spring (80) abuts against the flanging portion (821), and the other end of the second spring (80) abuts against the second side plate (211); and
the first side plate (61) is provided with a through hole through for the connecting shaft (81) to pass through, and the tube portion (820) extends into the through hole.

12. A charging station, comprising a power supply, and further comprising the adaptive adjusted charging mechanism according to any one of claims 1 to 11, wherein the charging head (1) is electrically connected to the power supply through a cable.
